# EUROPÄISCHE PATENTSCHRIFT

(11) **EP 1 812 705 B1**
(45) Veröffentlichungstag und Bekanntmachung des Hinweises auf die Patenterteilung: **01.10.2008**
(21) Anmeldenummer: 05802362.3
(22) Anmeldetag: 21.10.2005
(51) Int. Cl.: F02M 25/07, F02D 9/04, F02B 29/04

(54) **FAHRZEUG MIT TURBO-DIESELMOTOR UND ABGASRÜCKFÜHRUNG**
VEHICLE WITH A TURBOCHARGED DIESEL ENGINE AND EXHAUST RECYCLING
VEHICULE A MOTEUR TURBO DIESEL ET RECYCLAGE DES GAZ D'ECHAPPEMENT

(30) Priorität: 19.11.2004 DE 102004055846
(43) Veröffentlichungstag der Anmeldung: 01.08.2007
(73) Patentinhaber: Bayerische Motorenwerke Aktiengesellschaft, 80809 München (DE)
(72) Erfinder: TSCHALER, Gernot, A-4300 St. Valentin (AT); MAYR, Karl, A-4441 Behamberg (AT)
(86) Internationale Anmeldenummer: PCT/EP2005/011330
(87) Internationale Veröffentlichungsnummer: WO 2006/056279

(56) Entgegenhaltungen:
- EP-A- 1 213 468
- EP-A- 1 340 904
- EP-A- 1 455 078
- EP-A- 1 621 755
- WO-A-00/28203
- WO-A-99/15773
- US-A- 5 740 785
- US-B1- 6 263 672
- PATENT ABSTRACTS OF JAPAN Bd. 016, Nr. 363 (M-1290), 5. August 1992 (1992-08-05) -& JP 04 112957 A (HINO MOTORS LTD), 14. April 1992 (1992-04-14)

## Beschreibung

Die vorliegende Erfindung betrifft ein Fahrzeug gemäß dem Oberbegriff des Patentanspruches 1.

Ein derartiges Fahrzeug ist aus der EP 1 340 904 A1 bekannt. Zum relevanten Stand der Technik gehören ferner die US 5,740,785 sowie die EP 1 621 755 A2.

Die vorliegende Erfindung betrifft ein Fahrzeug mit einem Dieselmotor gemäß dem Oberbegriff des Patentanspruches 1.

Stand der Technik sind Dieselmotoren, die mit einem Turbolader, einem Ladeluftkühler und einer Abgasrückführeinrichtung ausgestattet sind. Moderne Dieselfahrzeuge werden zunehmend mehr mit Rußpartikelfiltern ausgestattet. Bei herkömmlichen Dieselmotoren erfolgt die Entnahme des in den Ansaugtrakt "abgezweigten" Abgases üblicherweise vor dem Abgas-Turbolader. Das "rückgeführte" Abgas wird dann üblicherweise nach dem Ladeluftkühler in den Ansaugtrakt eingespeist. Problematisch hierbei ist einerseits, dass das rückgeführte Abgas mit Dieselpartikeln verschmutzt ist. Da die Entnahme des rückzuführenden Abgases vor dem Abgas-Turbolader erfolgt, reduziert sich ferner der über die Turbine des Abgas-Turboladers strömende Massenstrom, was sich ungünstig auf die Dynamik des Abgas-Turboladers auswirkt. Nachteilig ist außerdem, dass bei einer Einleitung des Abgases nach dem Ladeluftkühler der Ladeluftkühler nicht zur Kühlung des Abgases genutzt werden kann.

Aufgabe der Erfindung ist es, ein Fahrzeug mit einem Turbo-Dieselmotor mit einer verbesserten Abgasrückführeinrichtung zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Fahrzeug mit einem Dieselmotor und einem Turbolader aus. Wie aus dem Stand der Technik bekannt ist, ist im Ansaugtrakt des Dieselmotors der Verdichter des Turboladers angeordnet, der Frischluft ansaugt, verdichtet und über einen Ladeluftkühler dem Dieselmotor zuführt. Im Abgastrakt des Dieselmotors ist die mit dem Verdichter drehgekoppelte Turbine des Abgas-Turboladers angeordnet. In Strömungsrichtung des Abgases ist nach der Turbine des Abgas-Turboladers ein Rußpartikelfilter angeordnet.

Der Kern der Erfindung besteht darin, dass in Strömungsrichtung des Abgases gesehen nach dem Rußpartikelfilter ein "Abzweigventil" angeordnet ist, das im Folgenden auch als "Schöpfventil" bezeichnet wird. Über das Abzweigventil bzw. Schöpfventil kann dem Abgastrakt ein Abgasteilvolumenstrom entnommen und dem Ansaugtrakt zugeführt werden. Da das Abzweig- bzw. Schöpfventil nach dem Rußpartikelfilter angeordnet ist, ist das dem Ansaugtrakt zugeführte Abgas frei bzw. nahezu frei von Rußpartikeln, was den Vorteil hat, dass das rückzuführende Abgas den Ansaugtrakt nicht verunreinigt. Ein weiterer Vorteil besteht darin, dass der gesamte Abgasvolumenstrom die Turbine des Abgasturboladers durchströmt, so dass die kinetische Energie des Abgases optimal genutzt werden kann. Das über das Abzweigventil bzw. Schöpfventil abgezweigte Abgas kann dem Ansaugtrakt beispielsweise vor dem Verdichter zugeführt werden. Alternativ dazu kann das rückzuführende Abgas dem Ansaugtrakt auch unmittelbar über das Verdichtergehäuse zugeführt werden.

Vorzugsweise weist das Abzweigventil bzw. Schöpfventil eine unbetätigte Grundstellung auf, in der es die Fluidverbindung zum Ansaugtrakt hin dicht verschließt, so dass das gesamte vom Motor abgegebene Abgas ungehindert in die Abgasanlage strömen kann. Durch das Öffnen des Abzweigventils bzw. Schöpfventils wird einerseits der "Abgasrückführkanal", d.h. die Fluidverbindung zwischen dem Abzweigventil und dem Ansaugtrakt immer mehr geöffnet und gleichzeitig der Abgaskanal in Richtung des Endrohrs immer weiter verschlossen, so dass der Abgasgegendruck erhöht und somit das Spülgefälle und letztlich die darstellbare Abgasrückführrate erhöht wird.

Um die Eintrittstemperatur des rückgeführten Abgases in den Ansaugtrakt bzw. in den Verdichter zu reduzieren, kann zwischen der "Entnahmestelle" im Abgastrakt und dem Ansaugtrakt, d.h. im Bereich zwischen dem Rußpartikelfilter und dem Ansaugtrakt ein Kühler angeordnet sein, der das rückgeführte Abgas kühlt.

Nach einer Weiterbildung der Erfindung sind das Abzweig- bzw. Schöpfventil und die Leitungen zur Rückführung von Abgas aus dem Abgastrakt in den Ansaugtrakt sowie der Kühler zur Kühlung des rückgeführten Abgases unmittelbar am Partikelfilter angebracht. Vorzugsweise bilden der Auspuffkrümmer, der Abgasturbolader, der Rußpartikelfilter und das Abzweig- bzw. Schöpfventil eine vormontierbare bzw. vormontierte bauliche Einheit.

Im Folgenden wird die Erfindung im Zusammenhang mit der Zeichnung näher erläutert. Es zeigen:
- Figur 1: Ein erstes Ausführungsbeispiel gemäß der Erfindung;
- Figur 2: eine zweites Ausführungsbeispiel gemäß der Erfindung;
- Figur 3: eine schematische Darstellung eines Schöpfventils gemäß der Erfindung;
- Figur 4: eine perspektivische Darstellung eines Schöpfventils gemäß der Erfindung;
- Fig. 5a, 5b: ein Ausführungsbeispiel mit einer mittig gelagerten Klappe;
- Fig. 6a, 6b: ein Ausführungsbeispiel mit drehbar gelagerten Klappen; und
- Figur 7: ein Ausführungsbeispiel mit einer schwenkbar gelagerten Klappe und einer Druckkompensationseinrichtung.

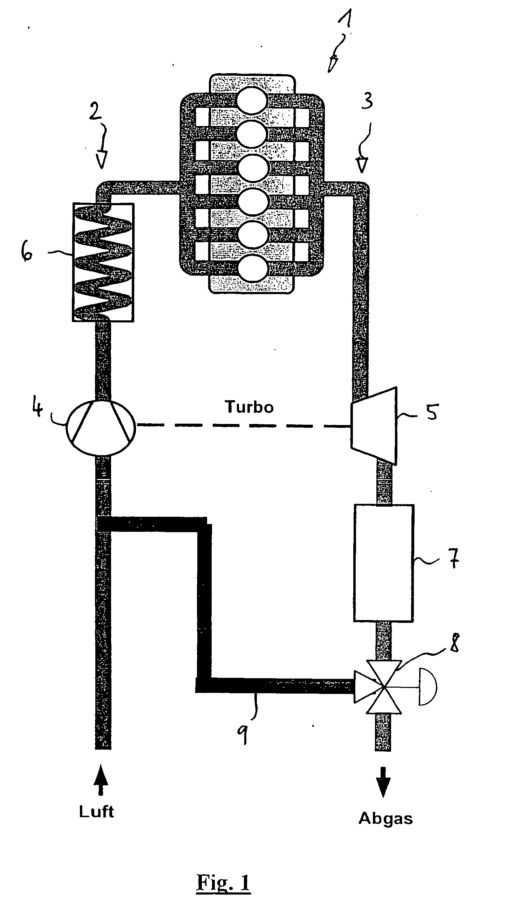

Figur 1 zeigt in schematischer Darstellung einen Turbo-Dieselmotor 1 mit einem Ansaugtrakt 2 und einem Abgastrakt 3. Im Ansaugtrakt 2 ist ein Verdichter 4 angeordnet, der mit einer Turbine 5 drehgekoppelt ist, die im Abgastrakt 3 angeordnet ist. Der Verdichter 4 und die Turbine 5 bilden einen Abgas-Turbolader. Die Turbine 5 wird von Abgas des Dieselmotors 1 durchströmt und treibt den Verdichter 4 an. Der Verdichter 4 saugt über einen nicht hier näher dargestellten Luftfilter Frischluft an, verdichtet diese und führt die verdichtete Frischluft über einen Ladeluftkühler 6, in dem die verdichtete Frischluft abgekühlt wird, dem Dieselmotor 1 zu.

Im Abgastrakt 3 ist nach der Turbine 5 ein Rußpartikelfilter 7 angeordnet, der einen Großteil der im Abgas enthaltenen Rußpartikel herausfiltert. In Strömungsrichtung des Abgases gesehen ist nach dem Rußpartikelfilter ein Abzweig- bzw. Schöpfventil 8 angeordnet. Das Abzweig- bzw. Schöpfventil 8 weist eine Grundstellung auf, in der der gesamte Abgasvolumenstrom über ein hier nicht näher dargestelltes Endrohr aus dem Abgastrakt ausströmt. Über eine Verbindungsleitung 9 ist das Abzweig- bzw. Schöpfventil mit dem Ansaugtrakt 2 verbunden. Bei dem hier gezeigten Ausführungsbeispiel mündet die Verbindungsleitung 9 in Ansaugrichtung vor dem Verdichter 4 in den Ansaugtrakt. Mit zunehmender Öffnung des Abzweig- bzw. Schöpfventils 8 wird der Strömungsweg zur Verbindungsleitung 9 zunehmend geöffnet und der Strömungsquerschnitt zum Endrohr hin zunehmend verschlossen. Vorzugsweise handelt es sich bei dem Schöpfventil 8 um ein elektronisch ansteuerbares Schöpfventil, dessen Ventilstellung in Abhängigkeit verschiedener Motor- bzw. Betriebszustandsparameter gesteuert wird. Da das rückgeführte Abgas dem Abgastrakt 3 nach dem Rußpartikelfilter 7 entnommen wird, kann es dem Ansaugtrakt 2 problemlos vor dem Verdichter 4 und dem Ladeluftkühler 6 zugeführt werden.

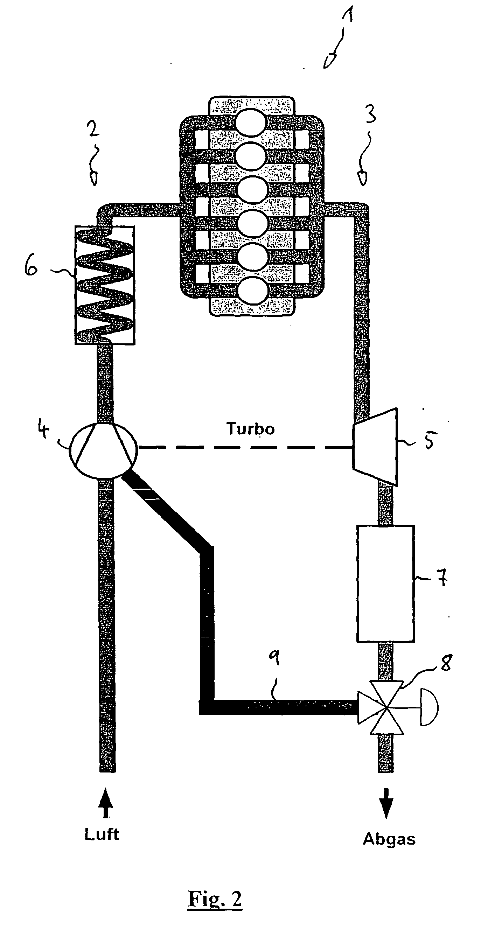

Figur 2 zeigt eine Variante der Erfindung. Im Unterschied zum Ausführungsbeispiel der Figur 1 ist hier das Abzweig- bzw. Schöpfventil 8 über die Verbindungsleitung 9 unmittelbar mit dem Verdichter 4 verbunden. Das rückzuführende Abgas wird also unmittelbar über das Verdichtergehäuse (nicht dargestellt) in den Verdichter 4 eingeleitet.

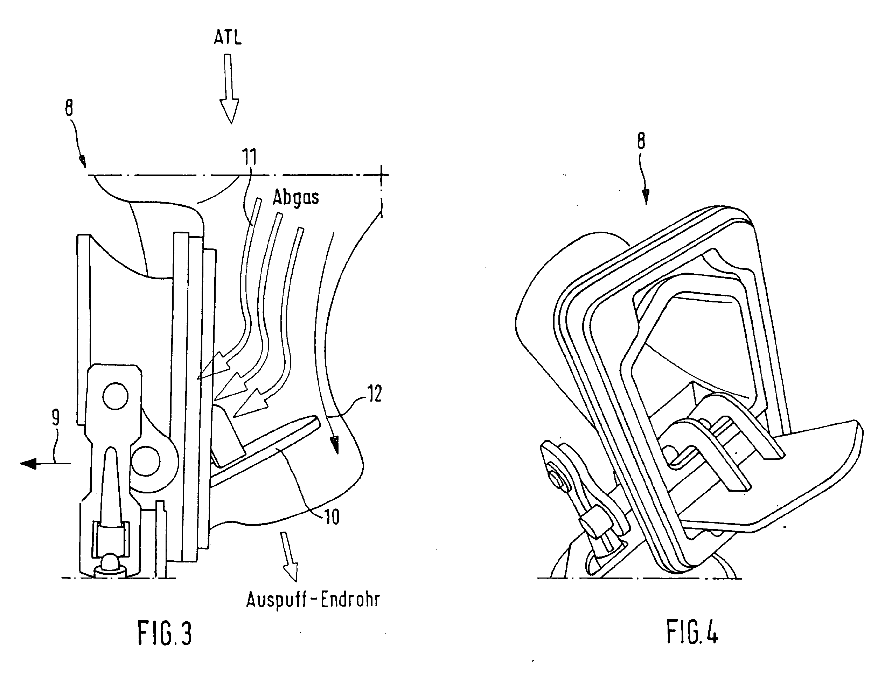

Figur 3 zeigt in schematisierter Darstellung einen Querschnitt des Abzweig- bzw. Schöpfventils 8. Das Abzweig- bzw. das Schöpfventil 8 weist eine schwenkbar angeordnete Klappe 10 auf. In einer Grundstellung sperrt die Klappe 10 die Fluidverbindung zwischen dem Abgastrakt und der Verbindungsleitung 9 (vgl. Figur 1, 2) ab. Das Abzweig- bzw. Schöpfventil 8 kann durch eine Elektronik teilweise oder ganz geöffnet werden. Wenn die Klappe 10, wie in Figur 3 gezeigt, teilweise geöffnet ist, wird ein Teilvolumenstrom 11 des Abgasvolumenstroms abgezweigt und über eine Verbindungsleitung 9 dem Ansaugtrakt 2 zugeführt. Der restliche Abgasvolumenstrom 12 strömt an der Klappe 10 vorbei in Richtung zu einem hier nicht näher dargestellten Auspuffendrohr.

Figur 4 zeigt das Abzweig- bzw. das Schöpfventil 8 der Figur 3 in perspektivischer Darstellung.

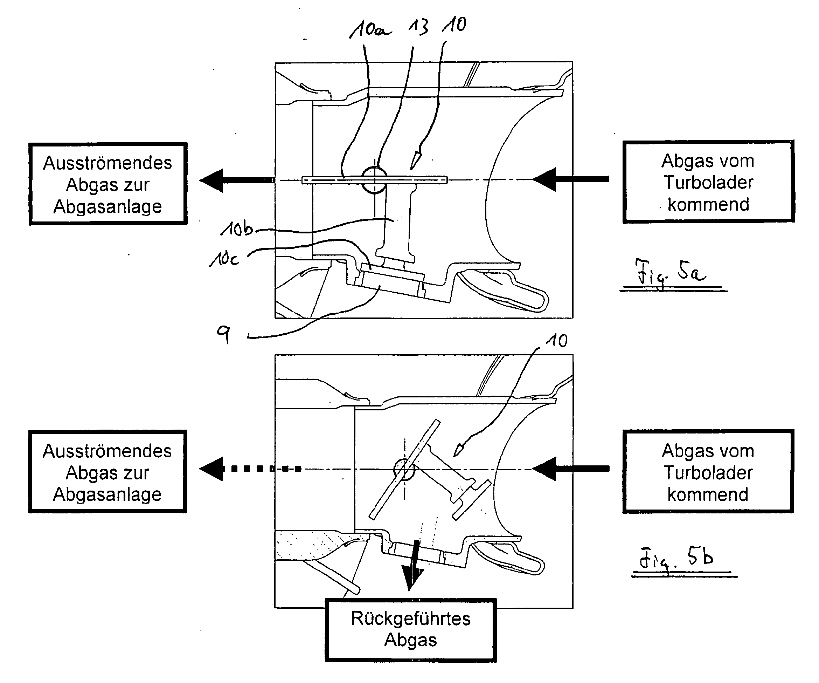

Die Figuren 5a und 5b zeigen ein Ausführungsbeispiel eines Abzweig- bzw. Schöpfventils 8, das als "mittig gelagerte Klappe" 10 ausgebildet ist. Die Klappe 10 weist einen ersten Klappenflügel 10a und einen quer davon abstehenden Klappenarm 10b auf, an dessen freiem Ende ein Klappenteller 10c angeordnet ist. Der Klappenteller 10c ist zum Verschließen der Verbindungsleitung 9 vorgesehen (vgl. Fig. 5a).

Die Klappe 10 ist an einer Schwenkachse 13 gelagert. Die Schwenkachse ist etwa in der Mitte des Klappenflügels 10a mit dem Klappenflügel 10a verbunden. Dadurch heben sich Strömungskräfte, die an dem Klappenflügel 10a angreifen, weitgehend auf, so dass die Klappe mit geringen Betätigungs- bzw. Stellkräften verschwenkt werden kann.

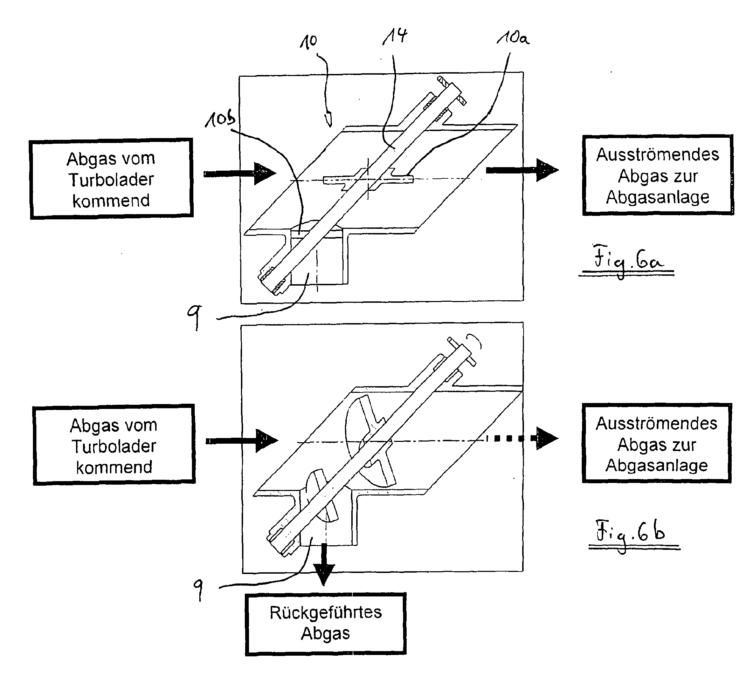

Die Figuren 6a und 6b zeigen ein Ausführungsbeispiel mit einer drehbar bzw. schwenkbar angeordneten Doppelklappe. Die Doppelklappe 10 ist durch eine Stellachse 14 gelagert. Die Stellachse 14 durchsetzt den den Abgasturbolader mit der Abgasanlage verbindenden Kanal schräg. Die Doppelklappe 10 weist einen ersten Klappenflügel 10a und einen zweiten Klappenflügel 10b auf. Der Klappenflügel 10a ist zum Schließen bzw. Öffnen des den Abgasturbolader mit der Abgasanlage verbindenden Kanals vorgesehen. Der Klappenflügel 10b ist zum Schließen bzw. Öffnen des Verbindungskanals 9 (vgl. Fig. 1) vorgesehen.

Die beiden Klappenflügel 10a, 10b sind nicht senkrecht in Bezug auf die Stelleachse 14 angeordnet, sondern schräg in Bezug auf die Stellachse 14, d.h. der Winkel zwischen der Stellachse 14 und den Ebenen der Klappenflügel 10a, 10b ist ungleich 90°. Bei dem hier gezeigten Ausführungsbeispiel schließen die Ebenen der Klappenflügel 10a, 10b mit der Stellachse 14 jeweils einen Winkel von ca. 45° ein. Durch die schräge Anornung der Klappenflügel 10a, 10b an der Stellachse 14 heben sich die Strömungskräfte im wesentlichen auf, was eine Verstellung mit geringen Stellkräften ermöglicht.

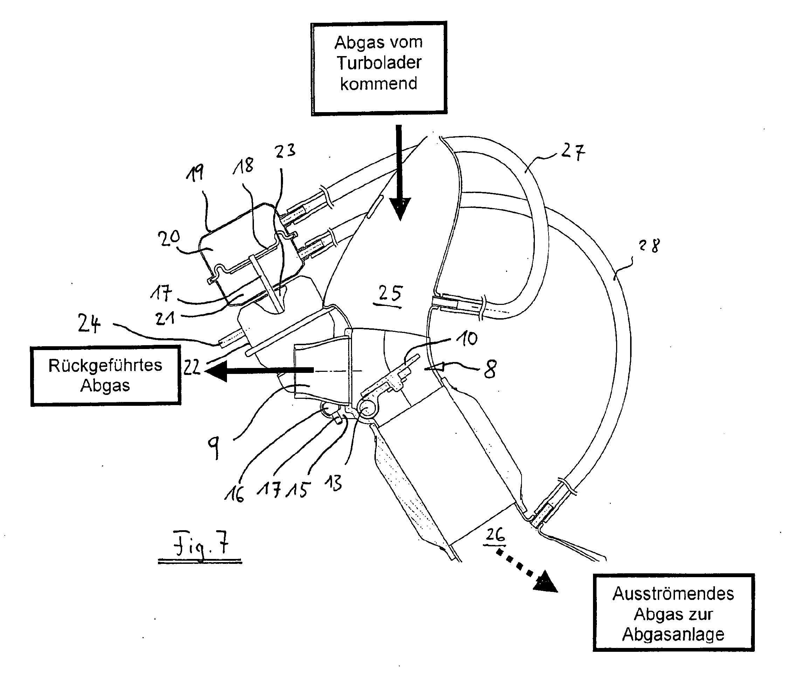

Figur 7 zeigt ein Ausführungsbeispiel, bei dem im Abgaskanal, welcher den Turbolader 7 (vgl. Fig. 1) mit der Abgasanlage verbindet, ein Abzweig- bzw. Schöpfventil 8 angeordnet ist, das als schwenkbare Klappe 10 ausgebildet ist. Im Unterschied zu Figur 5 ist die Klappe 10 an ihrem "Ende" schwenkbar an einer Schwenkachse 13 gelagert. In der in Figur 7 gezeigten Stellung ist die Klappe 10 fast ganz geöffnet. In dieser Öffnungsstellung wird der Großteil des vom Abgasturboladers kommenden Volumenstroms in die Verbindungsleitung 9 geleitet. Über die Verbindungsleitung 9 wird das "abgezweigte Abgas" in den Ansaugtrakt geleitet (vgl. Fig. 1). Wenn die Klappe 10 geschlossen ist, ist der Abgaskanal, welcher den Turbolader 7 (vgl. Fig. 1) mit der Abgasanlage verbindet, gegenüber dem Verbindungskanal abgesperrt. In dieser "Sperrstellung" wird das vom Abgasturbolader kommende Abgas vollständig über die Abgasanlage an die Umgebung abgeführt, d.h. es wird kein Abgas zum Ansaugtrakt geleitet.

Die Klappe 10 ist mit einem Stellhebel 15 verbunden. Durch Verschwenken des Stellhebels 15 kann die Klappe 10 geöffnet bzw. verschlossen werden. Der Stellhebel 15 wiederum ist über ein Gelenk 16 gelenkig mit einer Stellstange 17 verbunden. Die Stellstange 17 ist mit der Membran 18 einer ersten Druckdose 19 verbunden, die eine erste Druckkammer 20 und eine zweite Druckkammer 21 aufweist. Die Stellstange 17 ist ferner mit der Membran (nicht erkennbar) einer zweiten Druckdose 22 verbunden, die ebenfalls, entsprechend der Druckdose 19 eine erste, d.h. obere Druckkammer 23 und eine zweite, d.h. untere Druckkammer aufweist, die in der hier gezeigten Darstellung durch die Wandung der zweiten Druckdose 22 verdeckt ist. Die Stellstange erstreckt sich also durch die beiden Druckdosen 19, 22 hindurch. Die erste Druckkammer 23 der zweiten Druckdose 22 weist einen Unterdruckanschluss 24 auf, der mit dem Motor (nicht dargestellt) verbunden ist.

Die zweite Druckdose 22 ist zur Steuerung der Stellung der Klappe 10 vorgesehen. Wenn der Unterdruck in der Druckkammer 23 groß ist, d.h. wenn der absolute Druck in der Druckkammer 23 klein ist, dann drückt der in der zweiten, hier nicht zu erkennenden Druckkammer herrschende Druck die Membran der zweiten Druckdose und die damit verbundenen Stellstange 10 relativ weit "nach oben", was dazu führt, dass die Klappe 10 in die in Figur 7 gezeigte Öffnungsstellung geschwenkt wird. Wenn umgekehrt in der Druckkammer 23 ein größerer Druck herrscht, wird die Stellstange nach unten verschoben, was dazu führt, dass die Klappe 10 weiter bzw. ganz geschlossen wird.

Wenn, wie in Figur 7 dargestellt, die Klappe 10 geöffnet ist, entsteht in einem Abgaskanalabschnitt 25, der, in Strömungsrichtung des Abgases gesehen, vor der Klappe 10 liegt, ein Überdruck in Bezug auf einen Abgaskanalabschnitt 26, der, in Strömungsrichtung des Abgases gesehen, nach der Klappe 10 liegt. Soll die Klappe 10 geschlossen werden, muss also das durch den an der Klappe 10 entstehenden Staudruck entstehende Moment überwunden werden. Zur Überwindung dieses "Staumoments" ist eine Druckkompensationseinrichtung vorgesehen, die im wesentlichen durch die erste Druckdose 19 gebildet ist. Die erste Druckkammer 20 der ersten Druckdose 19 ist über einen Schlauch 27 mit dem Abgaskanalabschnitt 25 verbunden, der, in Strömungsrichtung des Abgases gesehen, vor der Klappe 10 liegt. Die zweite Druckkammer 21 der ersten Druckdose 19 ist über einen Schlauch 28 mit dem Abgaskanalabschnitt 26 verbunden, der, in Strömungsrichtung des Abgases gesehen, nach der Klappe 10 liegt. Wenn die Klappe 10 geöffnet ist (vgl. Fig. 7) herrscht in der Druckkammer 20 somit der in dem Abgaskanalabschnitt 25 herrschende Druck und in der Druckkammer 21 der im Abgaskanalabschnitt 26 herrschende Druck. Der Druck in der Druckkammer 20 ist bei geöffneter Klappe 10 also größer als der Druck in der Druckkammer 21. Die Druckdifferenz übt auf die Stellstange 17 eine nach unten wirkende Kraft aus, die über den Hebel 15 dem "Staumoment" entgegenwirkt. Somit wird das Staumoment ganz oder zumindest teilweise kompensiert. Die Klappe 10 kann somit mit einem relativ kleinen Schließmoment geschlossen werden.

## Patentansprüche

1. Fahrzeug mit einem Dieselmotor (1), der folgendes aufweist:
- einen Ansaugtrakt (2), über den Frischluft durch einen Verdichter (4) eines Abgas-Turboladers (4, 5) angesaugt, verdichtet und über einen Ladeluftkühler (6) dem Dieselmotor (1) zugeführt wird,
- eine Abgasanlage (3), in der aus dem Dieselmotor (1) ausströmendes Abgas eine mit dem Verdichter (4) drehgekoppelte Turbine (5) des Abgas-Turboladers (4, 5) antreibt und das Abgas nach der Turbine (5) durch einen Russpartikelfilter (7) strömt,
- ein Ventil (8), das in Strömungsrichtung des Abgases nach dem Russpartikelfilter (7) angeordnet ist und das in Fluidverbindung mit dem Ansaugtrakt (2) steht, wobei über das Ventil (8) dem Ansaugtrakt (2) ein Teilvolumenstrom des Abgases zugeführt werden kann,
**dadurch gekennzeichnet, dass**
das Ventil (8) ein Abzweigventil (8) ist, das in der Abgasanlage (3) angeordnet ist, wobei über das Abzweigventil (8) ein Abgasteilvolumenstrom aus einem Abgastrakt der Abgasanlage (3) entnommen und dem Ansaugtrakt (2) zugeführt werden kann, und dass das Abzwegventil (8) eine unbetätigte Grundstellung aufweist, in der es die Fluidverbindung zum Ansaugtrakt (2) hin verschließt.

2. Fahrzeug nach Anspruch 1, **dadurch gekennzeichnet, dass** das Abzweigventil in Strömungsrichtung der vom Ansaugtrakt (2) angesaugten Luft vor dem Verdichter (4) an den Ansaugtrakt (2) angeschlossen ist.

3. Fahrzeug nach Anspruch 1, **dadurch gekennzeichnet, dass** das Abzweigventil (8) über eine Verbindungsleitung (9) unmittelbar mit dem Verdichter (4) in Fluidverbindung steht.

4. Fahrzeug nach einem der vorangehenden Ansprüche, **dadurch gekennzeichnet, dass** das Abzweigventil (8) mehrere Öffnungsstellungen aufweist, wobei sich durch zunehmendes Öffnen des Abzweigventils (8) der Strömungsquerschnitt der Fluidverbindung zum Ansaugtrakt hin vergrößert und gleichzeitig der Strömungsquerschnitt der Abgasanlage (3) zu einem Endrohr hin verringert, und umgekehrt.

5. Fahrzeug nach einem der vorangehenden Ansprüche, **dadurch gekennzeichnet, dass** das Abzweigventil (8) eine schwenkbare Ventilklappe (10) aufweist, wobei durch die Schwenkstellung der Ventilklappe der Strömungsquerschnitt zum Ansaugtrakt (2) hin und der Strömungsquerschnitt zum Endrohr der Abgasanlage (3) hin bestimmt ist.

6. Fahrzeug nach einem der vorangehenden Ansprüche, **dadurch gekennzeichnet, dass** an den Dieselmotor (1) ein Auspuffkrümmer angeflanscht ist, der zusammen mit dem Abgas-Turbolader (4, 5), dem Rußpartikelfilter (7) und dem Abzweigventil (8) zu einer baulichen Einheit miteinander verbunden sind.

## Claims

1. A vehicle with a diesel engine (1) comprising the following:
- an induction manifold (2) through which fresh air is sucked through a compressor (4) of a turbocharger (4, 5), compressed and supplied to the diesel engine (1) via a charge cooler (6),
- an exhaust system (3) in which the exhaust gas flowing out of the diesel engine (1) drives a turbine (5) of the turbocharger (4, 5), coupled in rotation to the compressor (4), and the exhaust gas leaving the turbine (5) flows through a soot particle filter (7), and
- a valve (8) disposed in the direction of flow of the exhaust gas downstream of the soot filter (7) and in fluid connection to the induction manifold (2), wherein a partial flow of exhaust gas can be supplied to the induction manifold (2) via the valve (8),
**characterised in that**
the valve (8) is a branch valve (8) disposed in the exhaust system (3), wherein, via the branch valve (8), a part-volume of exhaust gas can be taken from an exhaust pipe of the exhaust system (3) and supplied to the induction manifold (2), and the branch valve (8) has an inactivated normal position in which it closes the fluid connection to the induction manifold (2).

2. A vehicle according to claim 1, **characterised in that** the branch valve is connected to the induction manifold (2) in the direction of flow of air sucked from the induction manifold (2) in front of the compressor (4).

3. A vehicle according to claim 1, **characterised in that** the branch valve (8) is in direct fluid connection to the compressor (4) via a connecting line (9).

4. A vehicle according to any of the preceding claims, **characterised in that** the branch valve (8) has a number of open positions, wherein, by progressively opening the branch valve (8), the flow cross-section of the fluid connection to the induction manifold is increased and simultaneously the flow cross-section of the exhaust system (3) towards a tail pipe is reduced, and vice versa.

5. A vehicle according to any of the preceding claims, **characterised in that** the branch valve (8) has a pivotable flap (10), wherein the pivoted position of the flap determines the flow cross-section to the induction manifold (2) and the flow cross-section to the tail pipe of the exhaust system (3).

6. A vehicle according to any of the preceding claims, **characterised in that** an exhaust manifold is flange-mounted on the diesel engine (1) and is connected to the turbocharger (4, 5), the soot filter (7) and the branch valve (8) to form a structural unit.

## Revendications

1. Véhicule comportant un moteur Diesel (1) ayant les caractéristiques suivantes:
- un collecteur d'admission (2) par l'intermédiaire duquel de l'air frais est aspiré à travers un compresseur (4) d'un turbocompresseur de gaz d'échappement (4, 5) pour être comprimé et être fourni au moteur Diesel (1) par l'intermédiaire d'un radiateur d'air d'alimentation (6),
- une installation de gaz d'échappement (3) dans laquelle les gaz d'échappement sortant du moteur Diesel (1) entraînent une turbine (5) du turbocompresseur de gaz d'échappement (4, 5) couplée en rotation au compresseur (4) et en aval de la turbine (5) les gaz d'échappement traversent un filtre à particules (7),
- une vanne (8) installée en aval du filtre à particules (7) dans le sens de passage des gaz d'échappement, et qui coopère par liaison fluidique avec le collecteur d'admission (2),
- la vanne (8) fournissant au collecteur d'admission (2) un débit volumique partiel des gaz d'échappement,
**caractérisé en ce que**
la vanne (8) est une vanne de dérivation (8) montée dans l'installation de gaz d'échappement (3) et par l'intermédiaire de la vanne de dérivation (8) on prélève une fraction de débit volumique de gaz d'échappement du conduit de gaz d'échappement de l'installation de gaz d'échappement (3) pour fournir cette fraction de gaz d'échappement au collecteur d'admission (2), et
la vanne de dérivation (8) présente une position de base non actionnée dans laquelle elle ferme la communication de fluide vers le collecteur d'admission (2).

2. Véhicule selon la revendication 1,
**caractérisé en ce que**
la vanne de dérivation est branchée sur le collecteur d'admission (2) en amont du compresseur (4) selon le sens de passage de l'air aspiré par le collecteur d'admission (2).

3. Véhicule selon la revendication 1,
**caractérisé en ce que**
la vanne de dérivation (8) est reliée par une liaison fluidique directement avec le compresseur (4) par une conduite de liaison (9).

4. Véhicule selon l'une des revendications précédentes,
**caractérisé en ce que**
la vanne de dérivation (8) présente plusieurs positions d'ouverture et l'ouverture croissante de la vanne de dérivation (8) augmente la section de passage de la liaison fluidique vers le collecteur d'admission et en même temps diminue la section de passage de l'installation de gaz d'échappement (3) vers le tuyau d'échappement et réciproquement.

5. Véhicule selon l'une des revendications précédentes,
**caractérisé en ce que**
la vanne de dérivation (8) comporte un volet de vanne (10), basculant, et la position basculée du volet de vanne définit la section de passage vers le collecteur d'admission (2) et la section de passage vers le tuyau d'échappement de l'installation de gaz d'échappement (3).

6. Véhicule selon l'une des revendications précédentes,
**caractérisé par**
un collecteur d'échappement relié au moteur Diesel (1) et qui avec le turbocompresseur de gaz d'échappement (4, 5), le filtre à particules (7) et la vanne de dérivation (8) sont reliés en un ensemble de construction.
